# EUROPÄISCHE PATENTSCHRIFT

(11) **EP 2 144 785 B1**
(45) Veröffentlichungstag und Bekanntmachung des Hinweises auf die Patenterteilung: **07.03.2012**
(21) Anmeldenummer: 08749331.8
(22) Anmeldetag: 06.05.2008
(51) Int. Cl.: B60N 2/42, B60N 2/005

(54) **SICHERHEITSSITZ MIT MITTELS EINER NAHT VERNÄHTEN HALTEGURTEN**
SAFETY SEAT COMPRISING SAFETY BELTS SEWED BY MEANS OF A SEAM
SIEGE DE SECURITE A CEINTURES DE RETENUE ASSEMBLEES PAR UNE COUTURE

(30) Priorität: 15.05.2007 DE 102007022816
(43) Veröffentlichungstag der Anmeldung: 20.01.2010
(73) Patentinhaber: AUTOFLUG GMBH, 25462 Rellingen (DE)
(72) Erfinder: HANSEN, Holger, 20357 Hamburg (DE)
(74) Vertreter: Müller, Karl-Ernst
(86) Internationale Anmeldenummer: PCT/EP2008/003604
(87) Internationale Veröffentlichungsnummer: WO 2008/138511

(56) Entgegenhaltungen:
- DE-B3-102004 062 350
- GB-A- 2 009 588
- JP-A- 2006 180 952
- US-A- 2 829 702

## Beschreibung

Die Erfindung betrifft einen Sicherheitssitz für Land-, Luft- und Seefahrzeuge, bei welchem die durch eine in dem Sitz sitzende Person bedingte Last von textilen Gurtbändern aufgenommen und in eine fahrzeugfeste Struktur abgeleitet wird.

Ein derartiger Sicherheitssitz ist beispielsweise in der DE 10 2004 062 350 B3 beschrieben. Hierbei ist eine die zu transportierende Person aufnehmende Sitzschale mittels zwischen dem Boden und der Decke des Fahrzeuges gespannter und oberhalb und unterhalb der Sitzschale verlaufender, aus einem textilen Material bestehender Haltegurte festlegbar. Mit einer derartigen Anordnung von textilen Gurtbändern als Haltegurte ist die Sitzschale von dem Fahrzeugchassis entkoppelt, so daß im Falle von auftretenden Vibrationen bzw. Stößen oder sogenannten Ansprengungen des Fahrzeuges, beispielsweise durch Minen, der Fahrzeuginsasse weniger beansprucht ist.

Bei einer derartigen Sitzaufhängung besteht das Problem, daß die eingesetzten und mit einer dauerhaften Spannung in den Fahrzeugen eingespannten Gurtbänder auch kurzzeitig auftretende dynamische Kräfte dämpfen müssen. Dabei durchläuft bei entsprechender Krafteinleitung eine zwischen Druck- und Zugbeanspruchung wechselnde, sinusartige Lastwechselwelle das entsprechende Gurtband. Soweit also aufgrund der dauerhaften Einspannung der Gurtbänder die zur Verbindung von Gurtabschnitten notwendigen Nähte zunächst ebenfalls dauerhaft belastet sind, ist die Gefahr gegeben, daß die jeweilige Naht bei einer auftretenden dynamischen Impulsbelastung höher als das Gurtband belastet wird. Somit kann bei der Auslegung der Gurtbänder die Grenzfestigkeit der Gurtbänder ggf. nicht ausgeschöpft werden.

Aus der US 6 412 430 B1 ist zur Vernähung zweier Gurtbandabschnitte miteinander die W-förmige Ausrichtung einer Naht in der Längsrichtung der zu vernähenden Gurtbandabschnitte grundsätzlich bekannt, wobei allerdings die W-Naht von einer darüber genähten Quernaht überlagert ist. Weiterhin ist aus der DE 699 12 886 T2 eine in Querrichtung, also in Richtung der Breite der zu vernähenden Gurtbandabschnitte ausgerichtete Zick-Zack-Naht bekannt. In beiden Fällen ergibt sich eine feste unnachgiebige Vernähung der Gurtbandabschnitte.

Aus dem Dokument US-A-2 829 702 (KEATING CHARLES E) ist ein Sicherheitssitz entsprechend dem Oberbegriff des Anspruchs 1 bekannt.

Der Erfindung liegt die Aufgabe zugrunde, einen Sicherheitssitz der eingangs genannten Art so auszugestalten, daß die zur Verbindung von Gurtbandabschnitten vorgesehenen Nähte die Grenzfestigkeit der eingesetzten Gurtbänder nicht begrenzen.

Zur Lösung dieser Aufgabe ist vorgesehen, daß die Gurtbänder wenigstens teilweise durch zwei miteinander, mittels einer Naht verbundene Gurtbandabschnitte gebildet sind und die in der Längsrichtung der miteinander vernähten Gurtbandabschnitte ausgerichtete W-förmig geführte Naht als Zick-Zack-Naht ausgeführt ist derart, dass die Naht ohne einen Abriss eine mindestens gleiche Dehnung wie das Gurtband erfahren kann..

Damit beruht die Erfindung auf dem Prinzip, daß das vorgeschlagene Nahtbild eine deutlich größere Dehnung als das jeweils eingesetzte Gurtband aufweist. Maßgeblich hierfür ist die Auslegung der in einem W-förmigen Verlauf geführten Naht als Zick-Zack-Naht, so daß die Naht aufgrund dieser Zick-Zack-Ausbildung eine mindestens gleiche Dehnung wie das Gurtband erfahren kann, ohne zu reißen. Die Ausführung der Zick-Zack-Naht in einem W-förmigen Verlauf gewährleistet dabei, daß die Vernähung der Gurtbandabschnitte gleichmäßig über die volle Gurtbandbreite verteilt ist und auftretende Längskräfte im Gurtband sehr gut aufgenommen und übertragen werden. Die Breite der Naht und damit die mögliche Dehnung dieser Zick-Zack-Naht muss dabei der erwarteten dynamischen Impulsbelastung des an den eingesetzten Gurtbändern aufgehängten Sicherheitssitzes angepasst werden. Hierbei kann erreicht werden, daß das Gurtband auch unter einer dynamischen Belastung bis zu seiner möglichen Grenzfestigkeit belastet werden kann.

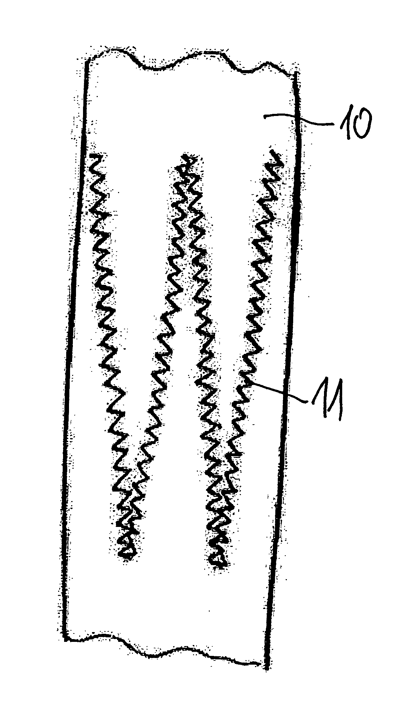

In der Zeichnung ist ein Ausführungsbeispiel der Erfindung wiedergegeben, welches nachstehend beschrieben ist. Die einzige Figur zeigt die auf ein Stück Gurtband aufgebrachte Naht in einer Draufsicht.

Soweit ein Gurtband 10 aus mittels einer Naht 11 miteinander vernähten einzelnen Gurtbandabschnitten gebildet ist, ist die Naht 11 in einem W-förmigen Verlauf angeordnet, wobei die Breite der W-Naht gleichmäßig im wesentlichen über die volle Gurtbandbreite verteilt ist. Die Naht selbst ist als Zick-Zack-Naht ausgeführt, was dazu führt, daß die Naht 11 eine größere Längsdehnung aushalten kann als das aus den vernähten Gurtbandabschnitten gebildete Gurtband 10. Damit wird die Grenzfestigkeit des eingesetzten Gurtbandes nicht mehr durch die Nahtfestigkeit bestimmt bzw. begrenzt.

## Patentansprüche

1. Sicherheitssitz für Land-, Luft- und Seefahrzeuge, bei welchem die durch eine in dem Sitz sitzende Person bedingte Last von textilen Gurtbändern aufgenommen und in eine fahrzeugfeste Struktur abgeleitet wird, wobei die Gurtbänder (10) wenigstens teilweise durch zwei miteinander, mittels einer Naht (11) verbundene Gurtbandabschnitte gebildet sind, **dadurch gekennzeichnet, daß** die in der Längsrichtung der miteinander vernähten Gurtbandabschnitte ausgerichtete W-förmig geführte Naht (11) als Zick-Zack-Naht ausgeführt ist derart, dass die Naht (11) ohne einen Abriss eine mindestens gleiche Dehnung wie das Gurtband erfahren kann.

## Claims

1. A safety seat for land, air and sea vehicles, in which the load caused by a person sitting in the seat is received by textile belt straps and transferred into a structure which is fixed to the vehicle, **characterized in that** the belt straps (10) are formed at least partially by two belt strap sections which are connected with each other by means of a seam (11), and seam (11), which is guided in a W-shape, aligned in the longitudinal direction of the belt strap sections which are sewn together, is embodied as a zigzag seam, such that the seam (11) can undergo without a break an at least identical extension to the belt strap.

## Revendications

1. Siège de sécurité pour des véhicules terrestres, aériens et maritimes, pour lequel la charge due à une personne assise sur le siège est absorbée par des ceintures textiles et est dérivée dans une structure fixée au véhicule, les ceintures (10) étant formées au moins en partie par deux sections de ceinture reliées entre elles à l'aide d'une couture (11), **caractérisé en ce que** la couture (11) guidée en W, orientée dans le sens longitudinal des sections de ceinture cousues l'une à l'autre est réalisée comme une couture en zigzag de telle manière que la couture (11) puisse subir sans rupture une extension au moins identique à celle de la ceinture.
